# EUROPÄISCHE PATENTSCHRIFT

(11) **EP 3 447 821 B1**
(45) Veröffentlichungstag und Bekanntmachung des Hinweises auf die Patenterteilung: **09.06.2021**
(21) Anmeldenummer: 18190277.6
(22) Anmeldetag: 22.08.2018
(51) Int. Cl.: B65D 51/28

(54) **TRANSPORTBEHÄLTER FÜR KFZ-TRAKTIONSBATTERIEN**
TRANSPORT CONTAINER FOR MOTOR VEHICLE TRACTION BATTERIES
RÉCIPIENT DE TRANSPORT POUR BATTERIES DE TRACTION DE VÉHICULE AUTOMOBILE

(30) Priorität: 22.08.2017 DE 102017214684
(43) Veröffentlichungstag der Anmeldung: 27.02.2019
(73) Patentinhaber: Fritz GmbH & Co. KG, 74193 Schwaigem (DE)
(72) Erfinder: Doll, Fredy, 77855 Achern (DE); Fritz, Wolfram, 74193 Schwaigern (DE); Nohe, Andreas, 74834 Elztal (DE); Sanna, Gerardo, 73547 Lorch (DE)
(74) Vertreter: Patentanwaltskanzlei Cartagena

(56) Entgegenhaltungen:
- DE-A1-102012 023 433
- DE-A1-102013 222 269
- DE-U1- 20 013 134
- DE-U1-202013 010 308

## Beschreibung

Die Erfindung betrifft einen Transportbehälter für eine Kfz-Traktionsbatterie nach dem Oberbegriff von Anspruch 1 sowie dessen Verwendung.

Gattungsgemäße Transportbehälter sind beispielsweise aus der nachveröffentlichten DE 102017202106 A1 bekannt. Sie dienen der Lagerung und vor allem dem Transport von Kfz-Traktionsbatterien vom Hersteller zum Ort des Fahrzeugbaus. DE 200 13 134 U1 offenbart einen Transportbehälter gemäß dem Oberbegriff des Anspruchs 1.

Als Kfz-Traktionsbatterie im Sinne dieser Erfindung werden vollständige Batterieeinheiten für Kraftfahrzeuge verstanden, die eine Kapazität von mindestens 5 kWh und eine Masse von mindestens 100 kg aufweisen. Übliche Batterieeinheiten weisen Kapazitäten von 20 kWh oder mehr und eine Masse von mindestens 200 kg auf. Typische Maße solcher Batterieeinheiten betragen 150 cm x 100 cm x 20 cm oder mehr.

Solche Kfz-Traktionsbatterien weisen in Hinblick auf Ihren Transport und ihre Lagerung besondere Anforderungen auf. Bereits die Maße und die Masse führen zu einer recht komplexen Handhabung.

Besonders ist jedoch vor allem die Gefahr eines Brandes. Diese Gefahr ist bei fabrikneuen und noch nicht im regelmäßigen Betrieb befindlichen Kfz-Traktionsbatterien vergleichsweise hoch. Dies führt zu besonderen Gefahren beim Transport und Lagerung solcher Kfz-Traktionsbatterien in Transportbehältern. Da derartige Brände sehr hohe Temperaturen entwickeln ist bei metallischen Transportbehältern die Gefahr unakzeptabel groß, dass die Transportbehälter im Brandfalle versagen und weitere gemeinsam mit der brandauslösenden Batterie gelagerte oder transportierte Batterien ebenfalls in Brand geraten.

### AUFGABE UND LÖSUNG

Aufgabe der Erfindung ist es, einen Transportbehälter für eine Kfz-Traktionsbatterie zur Verfügung zu stellen, der preisgünstig in der Herstellung ist und in dem die Batterie gegenüber einer Umgebung derart isoliert ist, dass es vergleichsweise lange braucht, bis der Transportbehälter brandbedingt versagt.

Erfindungsgemäß wird hierfür ein Transportbehälter für eine Kfz-Traktionsbatterie gemäß Anspruch 1 vorgeschlagen. Dieser Transportbehälter weist einen Tragboden und ein Deckenelement sowie eine Mehrzahl von Seitenwänden auf, die den Tragboden und das Deckenelement miteinander verbinden.

Die Seitenwände, der Tragboden und das Deckenelement definieren gemeinsam einen Aufnahmeraum zur Aufnahme der Kfz-Traktionsbatterie, wobei derTragboden eine Auflagefläche für die Traktionsbatterie bietet und gegenüberliegend zum Tragboden das Deckenelement vorgesehen ist. Die Seitenwände begrenzen den Bereich zwischen dem Tragboden und dem Deckenelement nach außen.

Dieser Aufnahmeraum weist mindestens Maße von 100 cm x 80 cm x 15 cm auf, worunterzu verstehen ist, dass der Aufnahmeraum bei geschlossenem Transportbehälter einen Quader der genannten Maße aufnehmen kann. Die übliche Maximalgröße des Aufnahmeraums beträgt 250 cm x 150 cm x 60 cm.

Zum Entnehmen der Traktionsbatterie ist der im Transportzustand durch die genannten Wandungen begrenzte Aufnahmeraum zu öffnen, wobei vorzugsweise entweder das Deckenelement von einer Basis aus Tragboden und Seitenwänden abgehoben wird oder das Deckenelement mitsamt der Seitenwände von dem die Basis bildenden Tragboden abgehoben wird.

Der Tragboden, das Deckenelement und/oder mindestens eine Seitenwand ist zumindest abschnittsweise durch mindestens ein Pappelement mit einer den Aufnahmeraum unmittelbar oder mittelbar begrenzenden Pappoberfläche ausgebildet.

Als Pappe im Sinne der Erfindung wird ein aus Holzstoff, Zellstoff, Halbzellstoff oder Papier durch Zusammenkleben oder -pressen gefertigter Werkstoff verstanden. Dieser Werkstoff hat sich für den Anwendungsfall von Transportbehältern für Traktionsbatterien als sehr vorteilhaft erwiesen. Bei ausreichend großen Wandungsstärken der hieraus aufgebauten Pappelemente von mindestens 3 mm und vorzugsweise mindestens 5 oder 7 oder gar 10 mm ist die Brandbeständigkeit besser als die von Metall, vermutlich da ein Schmelzen des Werkstoffs erst bei deutlich höheren Temperaturen stattfindet und da ein Verbrennen aufgrund unzureichender Sauerstoffversorgung nur in geringem Maße und langsam erfolgt.

Gleichzeitig können Pappe und hieraus hergestellte Pappelemente, die den Aufnahmeraum begrenzen, eine hohe mechanische Stabilität bieten, die insbesondere ausreichend ist, um mehrere baugleiche Transportbehälter stapeln zu können.

Weiterhin ist die Verwendung von Pappe als Werkstoff für die Wandungen auch deshalb von Vorteil, da die Traktionsbatterien unterschiedlicher Elektrofahrzeuge verschiedene Maße aufweisen und Pappe eine schnelle und kostengünstige Anpassung an neue Anforderungen erlaubt. Dies gilt insbesondere, wenn erfindungsgemäß zur Bildung der Pappoberfläche das Deckenelement, der Tragboden und/oder die Seitenwände eine Mehrzahl separater und parallel längserstreckter Pappelemente aufweisen, die aneinander anliegen und/oder einander überlappen. Dabei ist im Falle der Seitenwände idealerweise eine Ausrichtung zu wählen, bei der eine Mehrzahl separater und parallel längserstreckter Pappelemente in vertikaler Richtung erstreckt sind.

Ein solcher Aufbau von Wandungen, insbesondere der Seitenwände, aus einzelnen Pappelementen führt neben der genannten schnellen und kostengünstigen Anpassung bei geeigneter Formgebung zu einer hohen Tragbelastbarkeit des Transportbehälters. Vorzugsweise weist ein erfindungsgemäßer Transportbehälter Seitenwände auf, die jeweils aus einer Vielzahl von gleichartigen Pappelementen bestehen, insbesondere aus jeweils mindestens 10 separaten Pappelementen. Die Verwendung einzelner Pappelemente, die gemeinsam eine Wandung, insbesondere eine Seitenwand, bilden, ist auch deshalb von Vorteil, da auf Basis gleichbleibender Pappelemente und auf einfache Weise, Transportbehälter leicht modifizierbar sind, beispielsweise um einen Transportbehälter mit einem Aufnahmeraum anderer Größe zu schaffen.

Auch bei einem erfindungsgemäßen Transportbehälter ist die Dauer begrenzt, die die Wandungen einem Feuer mit hoher Temperatur widerstehen. Es ist daher vorzugsweise vorgesehen, dass der Transportbehälter einen Temperatursensor zur Ermittlung der Temperatur im Aufnahmeraum aufweist. Alternativ oder zusätzlich kann er auch ein elektrisches Anschlussmittel zum Anschluss an einen Temperatursensor der Kfz-Traktionsbatterie aufweisen. Hierdurch kann auch das im Weiteren erläuterte Einlassventil für brandhemmenden Schaum oder dergleichen gesteuert werden.

Erfindungsgemäß ist vorgesehen, dass das Pappelelement oder die Mehrzahl separater und parallel längserstreckter Pappelemente unmittelbar oder mittelbar den Aufnahmeraum begrenzen.

Als unmittelbare Begrenzung wird dabei eine Gestaltung angesehen, bei der unmittelbar die Oberflächen der Pappelemente den Aufnahmeraum begrenzen, so dass das zur Kfz-Traktionsbatterie gehörende Außengehäuse der Kfz-Traktionsbatterie direkt an den Pappelementen anliegen kann oder zwischen diesem Außengehäuse und der Oberfläche der Pappelemente lediglich ein Luftspalt verbleibt.

Eine mittelbare Begrenzung des Aufnahmeraums ist dann gegeben, wenn zwischen der in den Transportbehältern eingesetzten Kfz-Traktionsbatterie und der Oberfläche der Pappelemente noch mindestens eine Trennlage vorhanden ist. Hierbei kann es sich insbesondere um eine hitzebeständige Matte oder einer Mehrzahl solcher Matten handeln, die den die Pappoberfläche am Tragboden, an einer oder mehreren der Seitenwände und/oder am Deckel überdeckt oder von der in Art einer Umhüllung die Kfz-Traktionsbatterie umgibt.

Die Wandungen, also das Deckenelement, der Tragboden und die Seitenwände, müssen in den Bereichen, mit denen sie den Aufnahmeraum mittelbar oder unmittelbar begrenzen, nicht ausschließlich aus Pappe bestehen. Grundsätzlich gibt es auch andere Oberflächengestaltungen, die lange hohen Temperaturen widerstehen können. Da Pappe jedoch ein vergleichsweise günstiger Werkstoff mit sehr guten Eigenschaften beim Brandschutz ist und da Pappe bei geschicktem Aufbau der Wandungen auch hohe Traglasten aushält und somit für die Stapelbarkeit geeignet ist, wird es als vorteilhaft angesehen, wenn die zum Aufnahmeraum hinweisenden Flächen des Transportbehälters zum überwiegenden Teil (>50%), insbesondere vorzugsweise vollständig oder annähernd vollständig (>90%) durch Pappoberflächen von Pappelementen gebildet wird. Dies gilt für die zum Aufnahmeraum weisenden Oberflächen des Deckenelements, des Tragbodens und der Seitenwände jeweils separat, insbesondere jedoch für die Gesamtheit der zum Aufnahmeraum weisenden Oberflächen. Es gilt weiterhin unabhängig davon, ob die Pappoberflächen den Aufnahmeraumraum mittelbar oder unmittelbar begrenzen. Bei mittelbarer Begrenzung betreffen die genannten Kriterien die Oberfläche des Aufnahmeraums nach gedanklicher Entfernung ggf. noch vorhandener Trennlagen wie der genannten hitzebeständigen Matten oder Umhüllungen.

Von besonderem Vorteil ist es, wenn die parallel längserstreckten Pappelemente vorzugsweise endseitig offene Hohlkörper sind, insbesondere vorzugsweise ausgebildet als geschlossene Röhren mit kreiszylindrischem Außenquerschnitt.

Solche hohlzylindrischen Pappelemente haben sich als besonders tragstabil herausgestellt. Zudem ist bereits eine Vielzahl von Herstellungsverfahren für solche Pappelemente zu anderen Zwecken etabliert, so dass auf diese Herstellungsverfahren zurückgegriffen werden kann. Weiterhin sind endseitig offene hohlzylindrische Pappelemente in Seitenwänden von Vorteil, da sie einfach fixiert werden können, indem sie auf Steckabschnitte aufgesteckt werden, deren Außenmaße dem lichten Innenquerschnitt der Hohlzylinder entspricht. Hohlkörper stellen darüber hinaus auch einen besonders wirksamen Puffer gegen mechanische Beschädigungen beispielsweise im Zuge des Ladens und Entladens dar.

Es sind jedoch auch anderweitige Strukturen insbesondere der Seitenwände möglich. Ebenfalls Vorteilhaft ist es, wenn die parallel längserstreckten Pappelemente als partiell offene Rundröhrensegmente mit einem überspannten Winkel von mindestens 150° ausgebildet sind, vorzugsweise mit einem überspannten Winkel von mindestens 180°.

Solche partiell offenen Rundröhrensegmente lassen sich in vorteilhafter Weise miteinander verbinden oder aneinander anlegen, um hiermit dichte Wandungen, insbesondere Seitenwände, herzustellen. Wenngleich der Winkel von mindestens 150° ein besonders robustes Einhaken der Pappelemente mit ihren Nachbarelementen gestattet, werden auch kleinere überspannte Winkel von mindestens 90° und vorzugsweise mindestens 120° als bereits vorteilhaft angesehen.

Wenn bei einem erfindungsgemäßen Transportbehälter Wandungen, insbesondere Seitenwände, aus einer Vielzahl gleichartiger Pappelemente zusammengesetzt werden, können diese einzeln mit dem Tragboden oder dem Deckenelement verbunden sein. Denkbar ist jedoch auch, dass zum Zwecke der erleichterten Handhabung die Pappelemente bereits zuvor miteinander verbunden werden, beispielsweise zusammengeklebt werden.

Zur Festlegung der Seitenwände und insbesondere der die Seitenwände partiell bildenden Pappelemente kann vorgesehen sein, dass der Tragboden und/oder das Deckenelement eine Haltestruktur aufweisen, die zur Aufnahme der Seitenwände oder der Pappelemente vorgesehen sind. Diese Haltestruktur schafft eine formschlüssige Sicherung für die Seitenwände, so dass diese unter Last, beispielsweise wenn sich die Traktionsbatterie im Aufnahmeraum verschiebt, sicher ihre Position behalten.

Die Haltestruktur ist vorzugsweise jedoch nicht die einzige Sicherung der Seitenwände. Zusätzlich können diese am Tragboden oder am Deckenelement verklebt sein, insbesondere im Bereich der im Weiteren noch erläuterten Vertiefung.

Die Haltestruktur weist vorzugsweise einen innenseitig und außenseitig durch Halteflächen des Tragbodens bzw. des Deckenelements gebildeten Vertiefungsbereich auf, in den eine Mehrzahl von Pappelementen und vorzugsweise alle Pappelemente der Seitenwände hineinragen. Dieser Vertiefungsbereich kann als den Aufnahmeraum umlaufend umgebender Vertiefungsbereich ausgebildet sein. Der Vertiefungsbereich, der vorzugsweise in Art einer umlaufenden Nut den Aufnahmeraum umgibt, ist zum Einschieben einer Vielzahl von Pappelementen vorgesehen, die hierin gemeinsam gesichert sind.

Zusätzlich oder alternativ kann die Haltestruktur eine Mehrzahl von Einzelstrukturen zur individuellen Festlegung einer Mehrzahl von Pappelementen aufweisen. Diese Einzelstrukturen weisen eine Außenfläche oder eine Innenfläche auf, die der Form der Innenfläche bzw. der Außenfläche der hierdurch zu sichernden Pappelemente entspricht, so dass jedes Pappelement individuell formschlüssig gegen eine horizontale Verlagerung gesichert ist.

Zur Herstellung der Haltestruktur am Deckenelement und/oder am Tragboden sind mehrere Möglichkeiten gegeben. So kann vorgesehen sein, dass das Deckenelement und/oder der Tragboden aus einer Mehrzahl von miteinander verklebten Platten aufgebaut ist, die zumindest zum Teil Aussparungen zur Bildung der Haltestruktur aufweisen. Durch Zusammenfügen, insbesondere Zusammenkleben, der Platten werden die Platten bzw. ihre Segmente ortsfest zueinander gesichert und bilden so zusammen den Tragboden oder das Deckenelement.

Alternativ zum Aufbau des Deckenelements oder des Tragbodens aus Platten unter Bildung der Haltestruktur kann auch vorgesehen sein, dass das Deckenelement und/oder der Tragboden einstückig hergestellt ist, wobei die Haltestruktur durch eine Art Prägevorgang eingebracht ist. Dies ist eine Art urformender Vorgang der auch unter dem Namen "Faserform-Verfahren" bekannt ist.

Die Pappelemente bilden zwar vorzugsweise unmittelbar die den Aufnahmeraum begrenzende Oberfläche. An der Außenseite des Transportbehälters wird es allerdings als vorteilhaft angesehen, wenn hier eine metallische Außenhaut vorgesehen ist. Dies erleichtert die gasdichte Abdichtung des Transportbehälters. Zudem kann die Außenhaut durch die Anbringung von Strukturelementen lokal zur Aufnahme der Gewichtskraft der Kfz-Traktionsbatterie verstärkt sein oder Anbringungsflächen für entsprechende Träger von Auflageelementen bieten, die im Weiteren noch erläutert werden.

Ein erfindungsgemäßer Transportbehälter ist vorzugweise derart ausgebildet, dass keine oder nur wenige in Hinblick auf die Brandeindämmung strukturell wichtigen Teile aus Metall unmittelbar an den Aufnahmeraum angrenzen, da diese im Brandfalle schnell versagen oder an Stabilität verlieren würden. Jedoch kann ein erfindungsgemäßer Transportbehälter außerhalb des Aufnahmeraums an verschiedener Stelle und zu unterschiedlichen Zwecken metallische Komponenten aufweisen. Bevorzugt weist er metallische Strukturelemente auf, die am Deckenelement oder am Tragboden befestigt sind, vorzugsweise verklebt sind.

Zu den möglichen metallischen Strukturelementen gehören auch solche, die die genannte Haltestruktur zur Aufnahme des Pappelements oder der Pappelelemente bilden. Diese können beispielsweise in der Art von einseitig offenen U-Profilen gestaltet sein.

Insbesondere können die Seitenwände auch derart gestaltet sein, dass sie als metallisches Strukturelement einen aufrecht stehenden C-Profilabschnitt aufweisen, in den die Pappelemente quer zu Ihrer Erstreckungsrichtung in Profilrichtung eingeschoben sind. Das C-Profil mit den eingeschobenen Pappelementen bildet eine stabile Baueinheit, die die Montage vereinfacht. Die einander gegenüberliegenden Seite des C-Profiles dienen dabei als Haltestruktur für die Pappelemente
Die Pappelemente können dabei miteinander und/oder mit dem C-Profil oder anderen Blechteilen verklebt sein. Zweckmäßig kann auch die Einfügung eines strukturierten Bleches zwischen Rückwand des C-Profils oder einer anderweitigen Blechwandung und den Pappelementen sein, um deren Lage zusätzlich zu fixieren. Als ein solches strukturiertes Blech kommt beispielsweise Wellblech in Frage.

Insbesondere kann weiterhin am Tragboden eine Mehrzahl von metallischen Strukturelementen vorge-sehen sein, die als Abstandsträger vorgesehen sind. Diese Abstandsträger sind zueinander parallel erstreckt, um zwischen sich das Einfahren von Gabelzinken eines Staplers zu gestatten. Die Abstandshalter gewährleiten, dass eine Unterseite des Tragbodens ausreichend weit von einem Hallenboden entfernt ist, so dass die Zinken eines Gabelstaplers hier einfahren können.

Am Deckenelement kann mindestens ein Strukturelement in Form eines metallischen Deckelbeschlages zum Anheben des Deckenelements vorgesehen sein. Dieser metallische Deckelbeschlag kann insbesondere der Anbringung von Tragösen dienen, die ein Anheben des Deckenelements auf einfache Weise gestatten.

Da bei einem erfindungsgemäßen Transportbehälter vorzugsweise auch der Tragboden zumindest partiell und vorzugsweise überwiegend aus einem Pappelement oder einer Vielzahl von Pappelementen gebildet wird, kann es von Vorteil sein, wenn zusätzlich zu diesen Pappelemente Auflageelemente zur Aufnahme der üblicherweise recht großen Gewichtskraft der Kfz-Traktionsbatterie vorgesehen sind. Diese sind am Tragboden vorgesehen und weisen in Richtung des Aufnahmeraums.

Bei diesen Auflageelementen handelt es sich um vorzugsweise metallische oder partiell metallische Elemente, die auf dem Tragboden vorgesehen sind. Sie sind so positioniert, dass die Kfz-Traktionsbatterie auf ihnen aufliegt und dadurch die gesamte Gewichtskraft oder ein überwiegender Teil davon in die Auflageelemente eingekoppelt wird. Die Auflageelemente können insbesondere auch eine von einer planen Ebene abweichende Oberseite aufweisen, um mit einer aufgesetzten Kfz-Traktionsbatterie dahingehend zusammenzuwirken, dass die Kfz-Traktionsbatterie gegen Verrutschen formschlüssig gesichert ist.

Die Auflageelemente können auf verschiedene Art die eingekoppelte Gewichtskraft zu einer Unterseite des Transportbehälters weiterleiten.

Eine Möglichkeit sieht vor, dass die Auflageelemente an einer metallischen Stützstruktur befestigt sind, die oberhalb der Pappoberfläche des Tragbodens angeordnet ist. Diese Stützstruktur kann insbesondere aus den Tragboden überspannenden Trägern bestehen, die die Gewichtskraft zu den Seitenwänden weiterleiten. Von dort aus können weitere Strukturelemente, insbesondere metallische Strukturelemente, die Gewichtskraft zum Unterboden des Transportbehälters weiterleiten.

Der Vorteil einer solchen Bauweise liegt insbesondere darin begründet, dass sie es vergleichsweise einfach gestattet, die Anordnung der Auflageelemente für verschiedene Typen von Kfz-Traktionsbatterien anzupassen. Dies kann beispielsweise dadurch geschehen, dass die genannte Stützstruktur austauschbar ist, so dass eine für einen ersten Typ einer Kfz-Traktionsbatterie vorgesehene Stützstruktur mit einer Anzahl von für diesen ersten Typ passenden Auflageelementen als Ganzes oder segmentweise gegen eine andere Stützstruktur ausgetauscht wird, deren Auflageelemente passend für einen zweiten Typ einer Kfz-Traktionsbatterien angeordnet sind. Alternativ kann die Stützstruktur auch unverändert bleiben, jedoch die Verlagerung oder Austauschbarkeit der genannten Auflageelemente gestatten.

Neben der Möglichkeit, die Auflageelemente an einer metallischen Stützstruktur zu befestigen, die oberhalb der Pappoberfläche des Tragbodens angeordnet ist, ist es auch möglich, die Auflageelemente mit Trägern zu versehen, die die Pappoberfläche des Tragbodens durchdringen. Diese Träger sind dann auf ihrer von den Auflageelementen weg weisenden Seite jenseits der den Tragboden bildenden Pappoberfläche an einer metallischen Außenstruktur des Tragbodens oder der Basis mit Tragboden und Seitenwänden oder an einer metallischen Stützstruktur befestigt, die zwischen einer Außenstruktur des Tragbodens und der Pappoberfläche des Tragbodens angeordnet ist.

Eine solche Bauweise ist von Vorteil, da keine oder keine großen oberhalb des Tragbodens angeordneten Strukturelemente benötigt werden. Stattdessen ragen die genannten Träger durch die Pappoberfläche, wobei sie insbesondere zwischen aneinander anliegenden Pappelementen verlaufen können. An der Unterseite sind sie mit der genannten dort vorgesehen Stützstruktur oder Außenstruktur verbunden, so dass die Gewichtskraft auf diesem Weg in die Stützstruktur oder Außenstruktur eingekoppelt wird.

Aufgrund der Durchdringung der Pappoberfläche sind solche Auflageelemente mit Träger schwierig verlagerbar auszugestalten. Insbesondere bei Verwendung solcher meist ortsfester Auflageelemente mit Träger kann es daher von Vorteil sein, wenn ein Tragadapter, beispielsweise in Form einer metallischen Tragplatte, vorgesehen ist, der an einer Unterseite eine Auflagestruktur zur Auflage auf den Auflageelementen aufweist und der an seiner Oberseite zur Auflage oder Aufnahme der Kfz-Traktionsbatterie ausgebildet ist. Ein solcher Adapter ist somit an seiner Unterseite zur Auflage auf den stets gleich positionierten Auflageelementen vorgesehen. An seiner Oberseite ist er typabhängig für den jeweiligen Typ von Kfz-Traktionsbatterie individualisiert. Wenn die gleichen Transportbehälter für einen anderen Typ Kfz-Traktionsbatterie verwendet werden sollen, bedarf es somit nur eines Austausches des genannten Tragadapters. Ein solcher Tragadapter kann sehr einfach durch eine metallische Platte oder einen metallischen Rahmen gebildet sein, der Durchbrechungen, Vertiefungen oder Erhebungen an der Unterseite aufweist, um mit den Auflageelementen formschlüssig zusammenzuwirken.

Ein zweiter Aspekt der Erfindung betrifft eine Besonderheit gattungsgemäßer Transportbehälter für Kfz-Traktionsbatterien der eingangs erläuterten Art. Diese Besonderheit liegt darin, dass der Transportbehälter bereits dafür ausgebildet ist, im Brandfalle ein Löschmittel oder Brandeindämmungsmittel in den Aufnahmeraum leiten zu können. Zu diesem Zweck weist der Transportbehälter mindestens ein Einlassventil für ein Löschmittel oder Brandeindämmungsmittel auf, wobei das Einlassventil zur Selbstöffnung bei Temperaturerhöhung oder bei Druckerhöhung ausgebildet ist oder wobei das Einlassventil zur elektrisch gesteuerten Öffnung in Reaktion auf eine durch Sensoren erfasste Temperatur- oder Druckerhöhung ausgebildet ist. Dieses Einlassventil ist in einem Einlasskanal für ein Löschmittel- oder Brandeindämmungsmittel vorgesehen, der in den Aufnahmeraum mündet.

Diese Gestaltung führt dazu, dass das Einlassventil gleichsam automatisch geöffnet wird, wenn ein Brand eintritt. Die genannte elektronisch gesteuerte Öffnung kann dergestalt sein, dass im Transportbehälter vorhandene Sensoren den Brand erfassen, an einen Steuercomputer weitergeben, der Teil des Transportbehälters sein kann, aber nicht sein muss, und der Steuercomputer das Einlassventil dann mittels eines Signals öffnet. Bevorzugt wird es allerdings, wenn das Ventil ohne Zwischenschaltung elektronischer Datenverarbeitung öffnet. Derartige Ventile, die durch Hitzeeinwirkung öffnen, sind beispielsweise von Sprinkleranlagen bekannt. Sie basieren üblicherweise darauf, dass durch Hitze eine eingeschlossene Flüssigkeitsmenge expandiert und dabei eine Ventilwandung irreversibel zerstört.

Wenn das Ventil geöffnet wird, kann das Lösch- oder Brandeindämmungsmittel in den Innenraum strömen. Es kann sich insbesondere um eine Flüssigkeit oder einen Schaum handeln. Die zu erzielende Wirkung hängt dabei vom verwendeten Mittel ab. So kann die Sauerstoffzufuhr zum Brand durch das Mittel verringert werden oder lediglich eine zusätzliche Schutzschicht eingebracht werden, die den Zeitraum bis zum vollständigen Versagen des Transportbehälters verhindert.

Der genannte Einlasskanal kann mit einer externen Versorgung für das Mittel verbunden sein. So kann beispielsweise der transportierende Lkw über ein zentrales Versorgungssystem für das Lösch- oder Brandeindämmungsmittel verfügen. In einem solchen Fall ist das zentrale Versorgungssystem vorzugsweise dafür ausgebildet, in seinen Leitungen einen leichten Überdruck oder Unterdruck zu verursachen, so dass nach Öffnen des Einlassventils des Transportbehälters dieser Überdruck oder Unterdruck zusammenbricht. Dies kann vom zentralen Versorgungssystem erkannt werden und das Lösch- oder Brandeindämmungsmittel kann druckbeaufschlagt zum Transportbehälter geleitet werden.

Von besonderem Vorteil ist es, wenn der Transportbehälter selbst einen Speicher für ein Löschmittel oder Brandeindämmungsmittel aufweist. Dieser ist mit dem Einlasskanal verbunden, so dass das Löschmittel oder Brandeindämmungsmittel nach Öffnen des Einlassventils durch den Einlasskanal in den Aufnahmeraum strömen kann. Die Integration des Speichers in den Transportbehälter macht die beschriebene Sicherungsmaßnahme unanfällig, da sie auch dann funktionstauglich bleibt, wenn der Transportbehälter nicht mit einem externen Versorgungssystem verbunden ist, so beispielsweise beim Aufladen oder Abladen von Transportbehältern auf einen Lkw oder von einem Lkw.

Die Erfindung betrifft neben dem Transportbehälter selbst die Verwendung eines solchen Transportbehälters zum Zwecke des Transportes oder der Lagerung einer Kfz-Traktionsbatterie. Dabei findet der Transportbehälter insbesondere Verwendung, um die Kfz-Traktionsbatterie zur Einbaustätte zu transportieren, und/oder um die Kfz-Traktionsbatterie am Herstellungsort oder an der Einbaustätte zwischenzulagern.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erstes Ausführungsbeispiel eines erfindungsgemäßen Transportbehälters im geöffneten Zustand in einer Schrägansicht.
Fig. 2 zeigt die Komponenten des Transportbehälters der Fig. 1 in einer Explosionsdarstellung.
Fig. 3 und 4 zeigen ein zweites Ausführungsbeispiel eines erfindungsgemäßen Transportbehälters in einer Draufsicht und einer teilgeschnittenen Frontansicht.
Fig. 5 zeigt den Transportbehälter der Fig. 3 und 4 im geöffneten Zustand in einer Schrägansicht.
Fig. 6 zeigt die Komponenten des Transportbehälters der Fig. 3 bis 5 in einer Explosionsdarstellung.
Fig. 7 zeigt ein drittes Ausführungsbeispiel eines erfindungsgemäßen Transportbehälters im geöffneten Zustand in einer Schrägansicht.
Fig. 8 zeigt die Komponenten des Transportbehälters der Fig. 7 in einer Explosionsdarstellung.
Fig. 9 bis 11 zeigen Varianten zum Aufbau von Seitenwänden der Transportbehälter gemäß den Figuren 3 bis 8.
Fig. 12 und 13 verdeutlichen Möglichkeiten des Aufbaus des Tragbodens eines erfindungsgemäßen Transportbehälters.
Fig. 14 zeigt ein viertes Ausführungsbeispiel eines erfindungsgemäßen Transportbehälters in einer Schrägansicht.
Fig. 15 und 16 zeigen den Transportbehälter der Fig. 14 in einer längs geschnittenen Ansicht und einer quer geschnittenen Ansicht, wobei jeweils Details in den Fig. 16A und 17A vergrößert dargestellt sind.
Fig. 17 zeigt einen Längsschnitt durch eine alternative Ausgestaltung des Transportbehälters der Fig. 14.

Fig. 18 und 19 verdeutlichen anhand einer modifizierten Version des Ausführungsbeispiels der Fig. 17 die Funktionsweise einer in den Transportbehälter integrierten Brandbekämpfungseinrichtung.

### DETAILLIERTE BESCHREIBUNG DER AUSFÜHRUNGSBEISPIELE

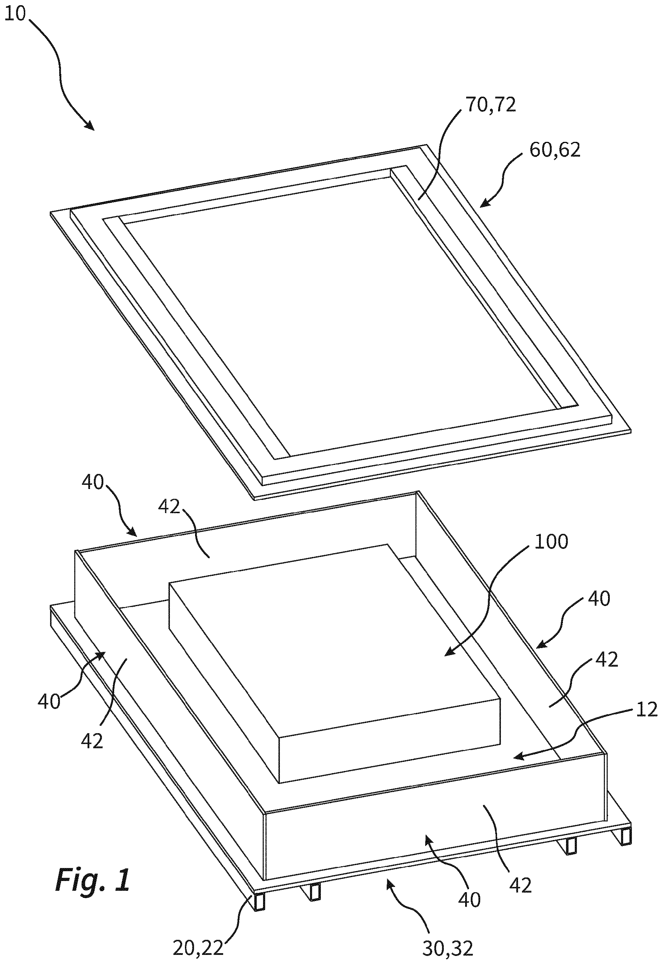

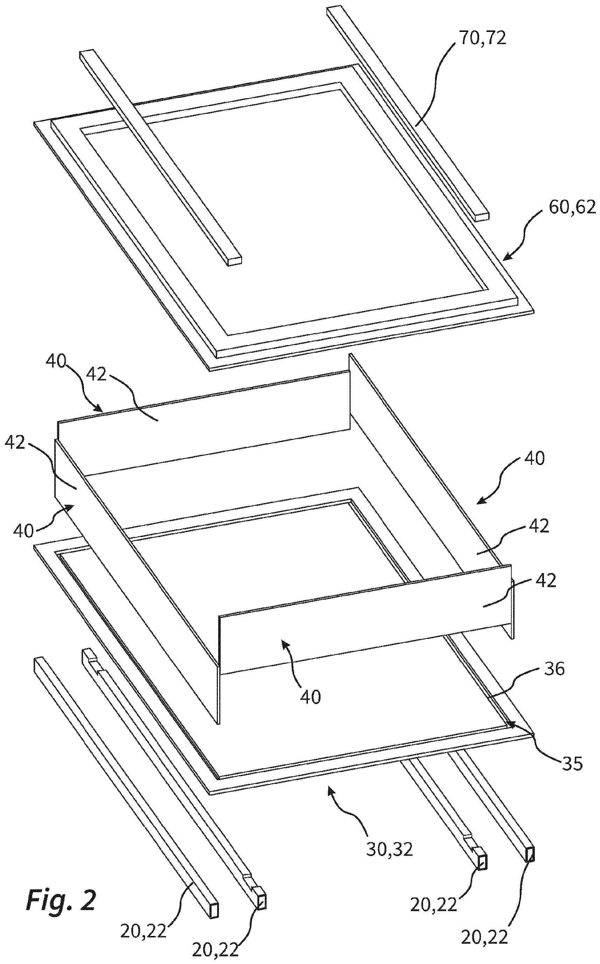

Die Fig. 1 und 2 zeigen ein erstes Ausführungsbeispiel eines erfindungsgemäßen Transportbehälters für Traktionsbatterien eines Kraftfahrzeuges.

Derartige Traktionsbatterien 100 sind vergleichsweise voluminös und schwer und zudem in vergleichsweise hohem Maße brandgefährdet. Die in Fig. 1 nur sehr schematisch dargestellte Traktionsbatterie 100 kann im Falle von Kleinwagen mit vergleichsweise geringer Batteriekapazität von beispielsweise 10 oder 20 kWh Maße von exemplarisch 40 cm x 80 cm x 15 cm aufweisen. Traktionsbatterien für Limousinen mit großer Reichweite und beispielsweise 80, 100 oder 120 kWh sind bedeutend größer und haben üblicherweise eine Grundfläche, die in Länge und Breite jeweils einen Meter überschreitet.

Zum Transport einer solchen Traktionsbatterie 100 ist der Transportbehälter 10 vorgesehen. Dieser verfügt über einen Tragboden 30 und ein Deckenelement 60, wobei in der durch Fig. 2 verdeutlichten Weise im Tragboden 30 und ebenso im Deckenelement 60 eine Haltestruktur 35 mit einer umlaufenden nutartigen Vertiefung 36 vorgesehen ist, um vier Seitenwände 40 aufnehmen zu können.

Alle bis hier genannten Elemente, also die Seitenwände 40, der Tragboden 30 sowie das Deckenelement 60 sind als Pappelemente 32, 42, 62 aus Pappe hergestellt, vorzugsweise mit einer Wandungsdicke von 10 mm oder mehr. Die Pappelemente 42, die die Seitenwände 40 bilden, sind in die nutartigen Vertiefungen 36 hineingedrückt und an ihrem oberen Ende durch eine korrespondierende nutartige Vertiefung an der Unterseite des Deckenelements 60 gehalten. Zusätzlich können sie, müssen jedoch nicht, mit den Pappelementen 32, 62 des Tragbodens 30 oder des Deckenelements 60 verleimt sein.

Zum Zwecke der Handhabung weist der Transportbehälter 10 auch metallische Strukturelemente 20, 70 auf, nämlich einerseits an seiner Unterseite metallische Abstandsträger 22, die an der Unterseite des Tragbodens 30 mit dem Pappelement 32 verklebt sind und das Einfahren von Staplerzinken zum Zwecke der Handhabung gestatten. Zusätzlich sind am Deckenelement 60 als metallische Strukturelemente Beschläge 72 vorgesehen, die in nicht näher dargestellter Weise mit Tragösen oder ähnlichem versehen sein können, um das Deckenelement 60 einfach entfernen zu können. Diese sind mittels Klebverbindungen an der Oberseite des Pappelements 62 angebracht.

Der Aufnahmeraum 12, der durch den überwiegenden Teil der Oberseite des Tragbodens 30, den überwiegenden Teil der Unterseite des Deckenelements 60 sowie die Innenseite der Seitenwände 40 definiert ist, ist vollständig durch Pappoberflächen der Pappelemente 32, 62, 42 gebildet.

Es hat sich gezeigt, dass diese Pappoberflächen in erheblich höherem Maße als metallische Oberflächen in der Lage sind, über längere Zeiträume einen Brand im Transportbehälter 10 derart zu isolieren, dass er nicht auf benachbart gelagerte Transportbehälter übergreift. Der Brand entwickelt abhängig vom Typ der Chemikalien in der Traktionsbatterie 100 Temperaturen von deutlich über 1000°C. Bei den für Transportbehälter infrage kommenden Metallen ist hier bereits die Erweichungstemperatur oder gar der Schmelzpunkt erreicht, so dass der Transportbehälter aus Metall versagen würde und mit erheblicher Wahrscheinlichkeit umliegende Transportbehälter anschließend in Mitleidenschaft gezogen würden, insbesondere wenn sie auf dem brandbefangenen Transportbehälter gestapelt sind. Es hat sich gezeigt, dass die Pappoberflächen hingegen über einen längeren Zeitraum dem Brand widerstehen können, da ihr Schmelzpunkt deutlich oberhalb dessen von Metall liegt und da ein Erweichen zumindest nicht in gleichem Maße wie bei Metall zu erwarten ist.

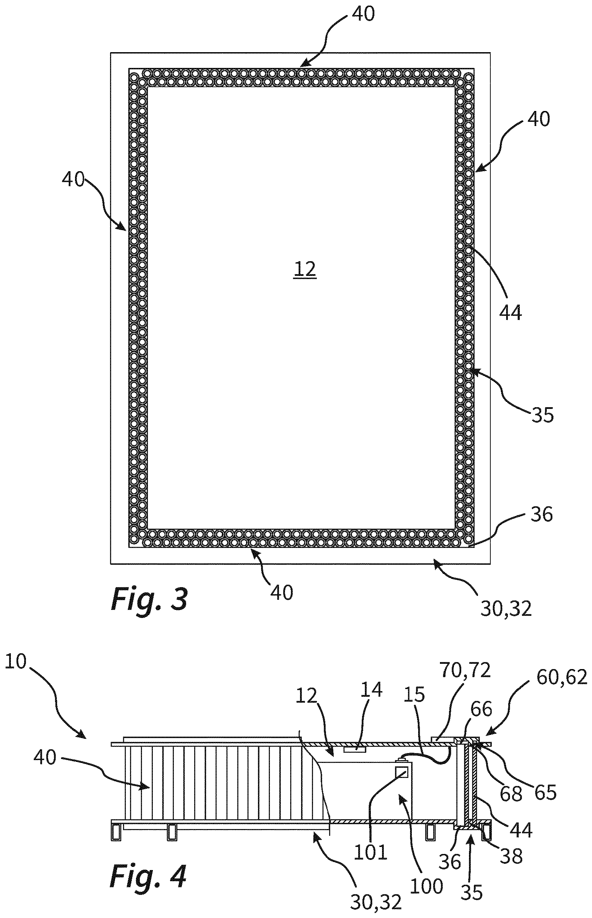

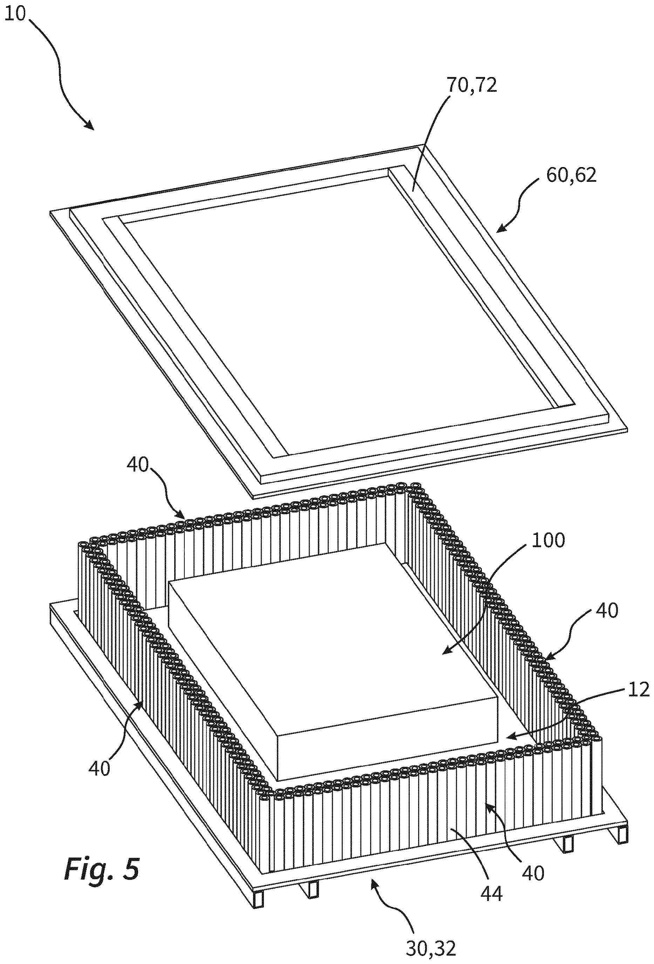

In den Fig. 1 und 2 ist nicht dargestellt, dass ein erfindungsgemäßer Transportbehälter 10 vorzugsweise über Vorkehrungen zur Temperaturmessung verfügt. Diese sind beim zweiten Ausführungsbeispiel der Fig. 3 bis 6 erläutert und könnten in gleicher Weise auch beim ersten Ausführungsbeispiel sowie den anderen Ausführungsbeispielen realisiert sein.

Beim zweiten Ausführungsbeispiel der Fig. 3 bis 6 sind die Seitenwände 40 zur Erzielung einer höheren Stabilität anders ausgebildet. Wie sich insbesondere anhand der Draufsicht der Fig. 3 ersehen lässt, sind in die Vertiefung 36 eine Vielzahl von Pappelemente 44 in Form von Pappröhren eingeschoben, welche vorliegend als Hohlkörper mit einer Wandungsstärke von 10 mm bis 15 mm ausgebildet sind, jedoch auch als Vollmaterial ausgebildet sein könnten. Diese Pappelemente 44 sind in zwei zueinander versetzten Lagen angeordnet. Wie sich anhand der Fig. 4 ersehen lässt, sind die röhrenförmigen Pappelemente 44 nicht nur durch die Aufnahme in den Vertiefungen 36 fixiert, sondern zusätzlich dadurch, dass endseitig vom Tragboden 30 und dem Deckenelement 60 aus, Einzelstrukturen 38, 68 in Art von Erhebungen in die Stirnenden der Pappelemente 44 hineinragen.

Die röhrenförmigen Pappelemente 44 widerstehen ähnlich den planen Seitenwänden 40 des vorangegangenen Ausführungsbeispiels sehr gut einem Brand im Aufnahmeraum 12, so dass für einen vergleichsweise langen Zeitraum benachbarte Transportbehälter nicht in Mitleidenschaft gezogen werden. Der Aufbau der Seitenwände 40 aus den Pappelementen 44 oder anderen von einer planen Erstreckung abweichenden Elementen führt zu einem hohen Maß an Stabilität, insbesondere in Hinblick darauf, dass auf dem vom Brand betroffenen Transportbehälter 10 weitere baugleiche Transportbehälter ruhen können. Es hat sich gezeigt, dass selbst recht lange brennende Brände, die ausreichend lange brennen, um die Pappelemente 44 in Mitleidenschaft zu ziehen, vergleichsweise lange nicht in der Lage sind, die Seitenwände 40 derart zu schwächen, dass diese als Ganzes kollabieren und dadurch die auf dem Transportbehälter 10 stehenden weiteren Transportbehälter in Mitleidenschaft gezogen werden.

Anhand der Fig. 4 ist zu erkennen, dass über einen Temperatursensor 14 sowie alternativ oder additiv über einen Temperatursensor 101 in der Traktionsbatterie 100 und einer Anbindung desselben an eine Umgebung durch ein Anschlussmittel 15 in Art einer Leitung eine Temperaturüberwachung des Aufnahmeraums 12 erfolgen kann. Ein Brand kann somit frühzeitig erkannt werden, so dass beispielsweise ein die Traktionsbatterien transportierender Lkw einen sicheren Parkplatz ansteuern kann.

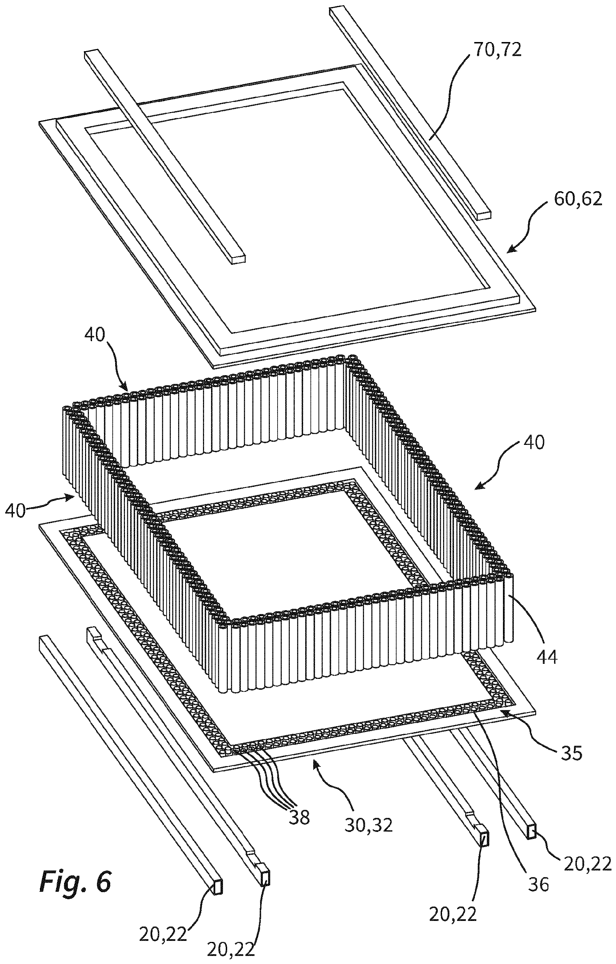

Anhand der Explosionsdarstellung der Fig. 6 ist gut ersichtlich, wie die Struktur des Tragbodens 30 beschaffen ist, um die röhrenförmigen Pappelemente 44 der Seitenwände 40 aufzunehmen. Hierzu ist klarzustellen, dass die Seitenwände 40, die in Fig. 6 als geschlossener umlaufender Ring ausgebildet sind, entweder tatsächlich in Form eines beispielsweise durch Klebverbindungen zusammengefügten Rings ausgestaltet sein können, der als Ganzes in die Haltestruktur 35 des Tragbodens 30 eingeschoben wird. Alternativ ist es jedoch auch möglich, die als kreiszylindrische Hohlprofile ausgebildeten Pappelemente 44 einzeln einzusetzen. Die am Tragboden 30 vorgesehenen Einzelstrukturen 38 erleichtern dies.

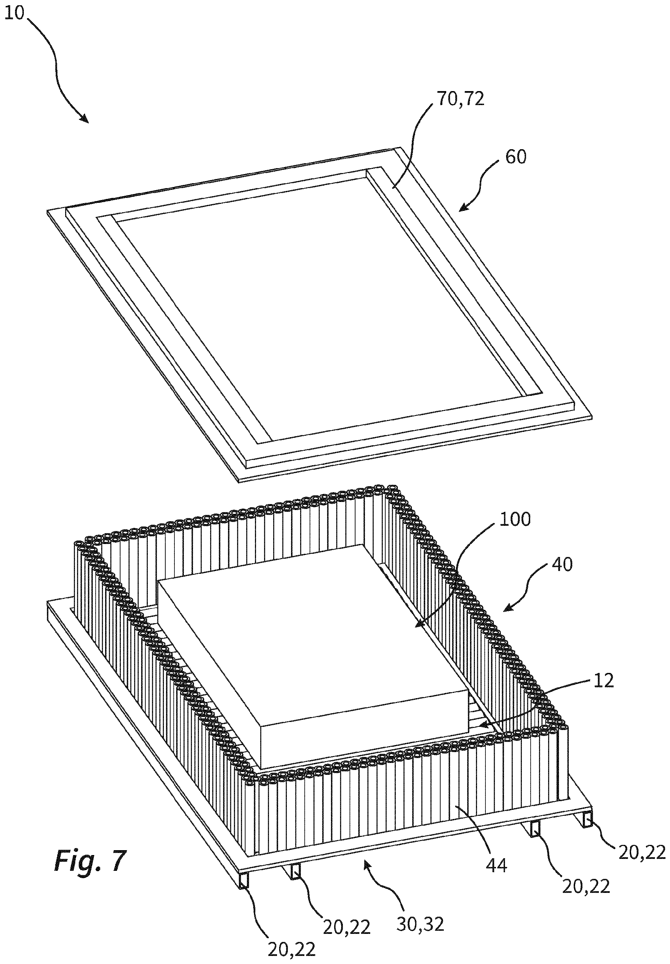

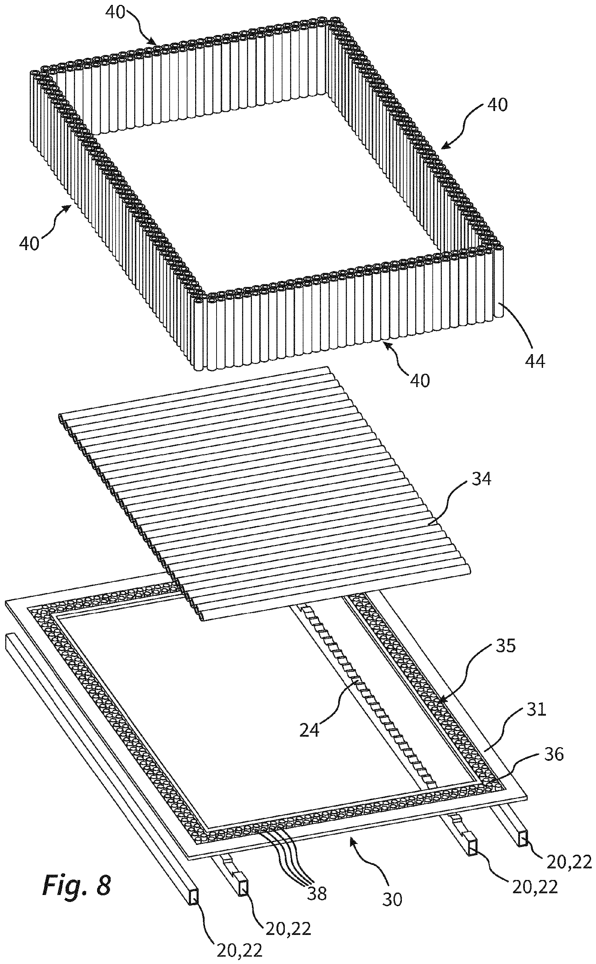

Bei der Ausgestaltung gemäß den Fig. 7 und 8 entspricht der Aufbau der Seitenwände und des Deckenelements jenem der Fig. 3 bis 6. Allerdings ist hier vorgesehen, dass jener Teil des Tragbodens 30, der den Aufnahmeraum 12 nach unten begrenzt, ebenfalls durch einzelne parallel erstreckte Pappelemente 34 in Form von Pappröhren gebildet ist. Hierfür weist der den Aufnahmeraum 12 umgebende Teil des Tragbodens 30 eine Art ringförmige Struktur mit einer zentrischen Aussparung zur Einfügung der röhrenförmigen Pappelemente 34 auf. Die Abstandsträger 22 sind an ihrer Oberseite zum Teil mit einer Struktur versehen, die formschlüssig mit diesen röhrenförmigen Pappelementen 34 zusammenwirkt und diese hierdurch lagefixiert.

Bei Variationen hierzu kann auch vorgesehen sein, dass die röhrenförmigen Pappelemente 34 auf eine geschlossene Oberfläche des Tragbodens 30 aufgelegt werden, statt in eine Aussparung eingelegt zu werden. Ein ähnlicher Aufbau, wie er sich aus Fig. 8 in Hinblick auf den Tragboden 30 ergibt, kann gleichermaßen auch am Deckenelement 60 vorgesehen sein.

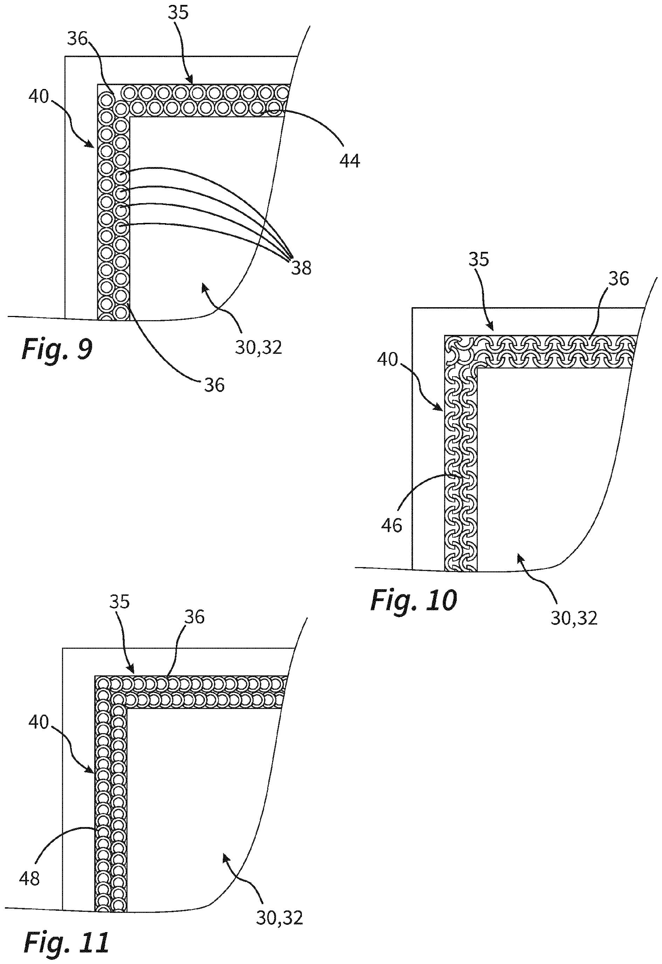

Die Fig. 9 bis 11 verdeutlichen, wie aus einer Vielzahl von Pappelementen die Seitenwände 40 aufgebaut sein können. Dabei entspricht der Aufbau der Fig. 9 mit den auf die Einzelstrukturen 38 aufgeschobenen röhrenförmigen Pappelementen 44 den vorangegangenen Ausführungsbeispielen. Bei der Variante der Fig. 10 sind als Pappelemente 46 gegenläufig eingesetzte Halbschalen aus Pappe statt der Hohlröhren der Fig. 9 vorgesehen. Eine dritte Variante zeigt Fig. 11, bei der die Pappelemente 48 röhrenförmig und geschlitzt ausgebildet sind, so dass sie in einer überlappenden Struktur angeordnet sein können.

Die Bauweisen der Fig. 10 und 11 führen zwar zu einer etwas geringeren Tragfähigkeit des Transportbehälters 10. Dafür haben sie sich als vorteilhaft in Hinblick auf die Dichtigkeit herausgestellt, so dass die Gefahr geringer ist, dass im Brandfalle Flammen durch Lücken zwischen den Pappelementen hindurch nach außen lodern können.

Bei dem Tragboden 30 und dem Deckenelement 60, wie sie in Fig. 4 dargestellt sind, lässt sich ersehen, dass die entsprechenden Pappelemente 32, 62 einstückig ausgebildet sind, indem das Pappmaterial bereits bei der Pappherstellung in eine entsprechende Form gedrückt wird. Dieser Herstellungsprozess ist jedoch nicht ganz einfach zu handhaben, so dass in Abhängigkeit von Randparametern auch andere Bauweisen möglich sind.

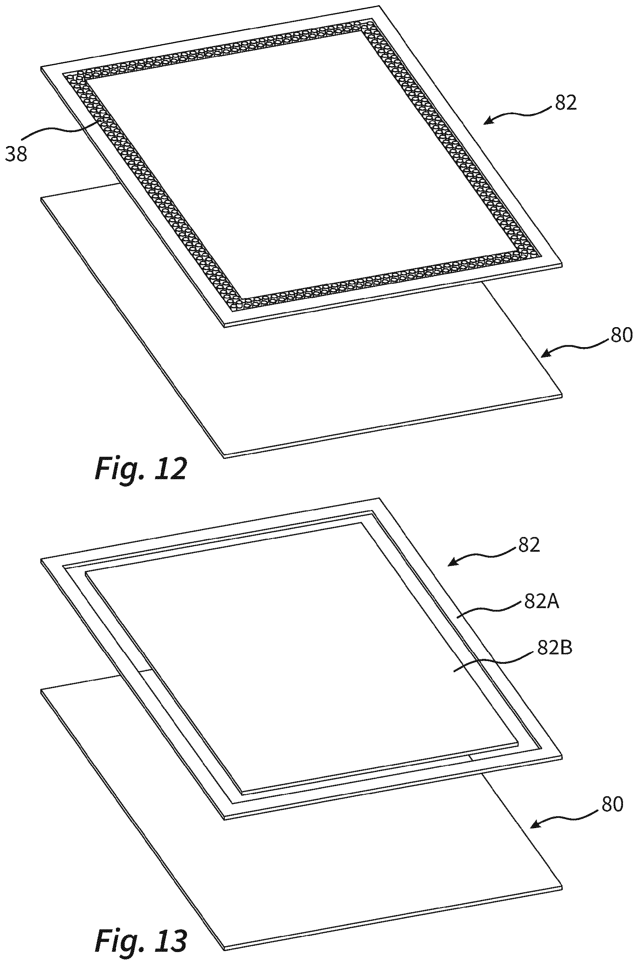

Fig. 12 verdeutlicht eine Möglichkeit, bei der zwei Platten 80, 82 Verwendung finden, wobei die obere Platte 82 aus einer Vielzahl von Einzelelementen besteht, die erst durch eine Klebverbindung mit der unteren Platte 80 einen Tragboden mit den Merkmalen der beschrieben Tragböden bieten.

Da das Anbringen der Einzelstrukturen 38 manuell wirtschaftlich nicht geleistet werden kann, kann es auch sinnvoll sein, hierauf zu verzichten. In dem Fall kann ein Tragboden 30 entsprechend der Darstellung der Fig. 13 aus nur drei Plattenelementen ausgebildet sein, nämlich einer ununterbrochenen Basisplatte 80 sowie einer Ringplatte 82A und einer Innenplatte 82B, die auf die Platte 80 aufgeklebt werden und zwischen denen eine Aussparung vorgesehen ist, die im verklebten Zustand die Vertiefung 36 bildet.

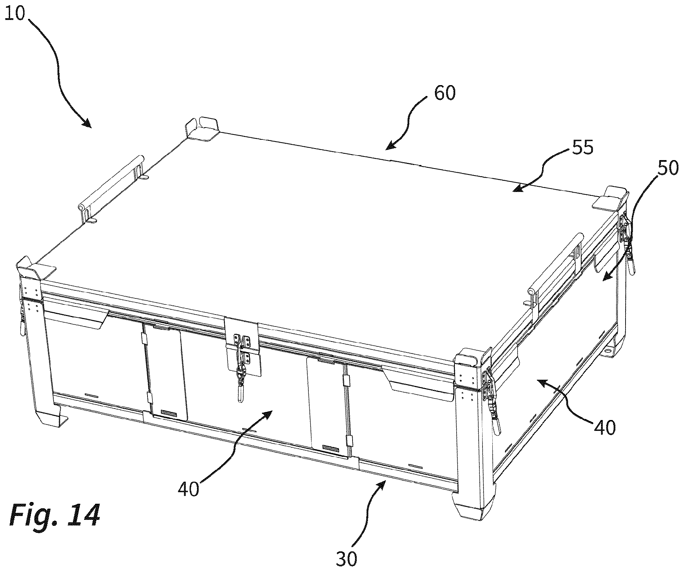

Die Fig. 14 zeigt ein weiteres Ausführungsbeispiel eines erfindungsgemäßen Transportbehälters für Traktionsbatterien der eingangs beschriebenen Art für ein Kraftfahrzeug. Bei diesem und den weiteren Ausführungsbeispielen weicht die Bauweise insofern von den vorangegangenen Ausführungsbeispielen ab, da die folgenden Transportbehälter eine metallische Außenschale haben, in die die Pappelemente als zusätzliche Wandungsschicht eingefügt sind. Die genannte metallische Außenschale besteht dabei aus zwei Hauptelementen, nämlich einem Unterteil, der den Tragboden und die Seitenwände umgibt bzw. partiell bildet, und ein Oberteil, welches das Deckenelement umgibt bzw. partiell bildet.

Der in Fig. 14 dargestellte Transportbehälter 10 verfügt über einen Tragboden 30 und vier Seitenwände 40, die über das genannte Unterteil 50 fest miteinander verbunden sind und einen in Fig. 14 nicht erkennbaren Aufnahmeraum 12 nach unten und seitlich begrenzen. Lösbar befestigt an den Seitenwänden ist ein Deckenelement 60 vorgehen, das außenseitig vom schalenartigen Oberteil 55 abgeschlossen wird. Das den Tragboden 30 und die Seitenwände 40 umgebende Unterteil 50 sowie das aufgesetzte Deckenelement 60 sind in den Eckbereichen mit Füßen bzw. Auflageflächen für Füße versehen, so dass Transportbehälter der beschriebenen Art gestapelt werden können und dabei gegen Verrutschen gesichert sind.

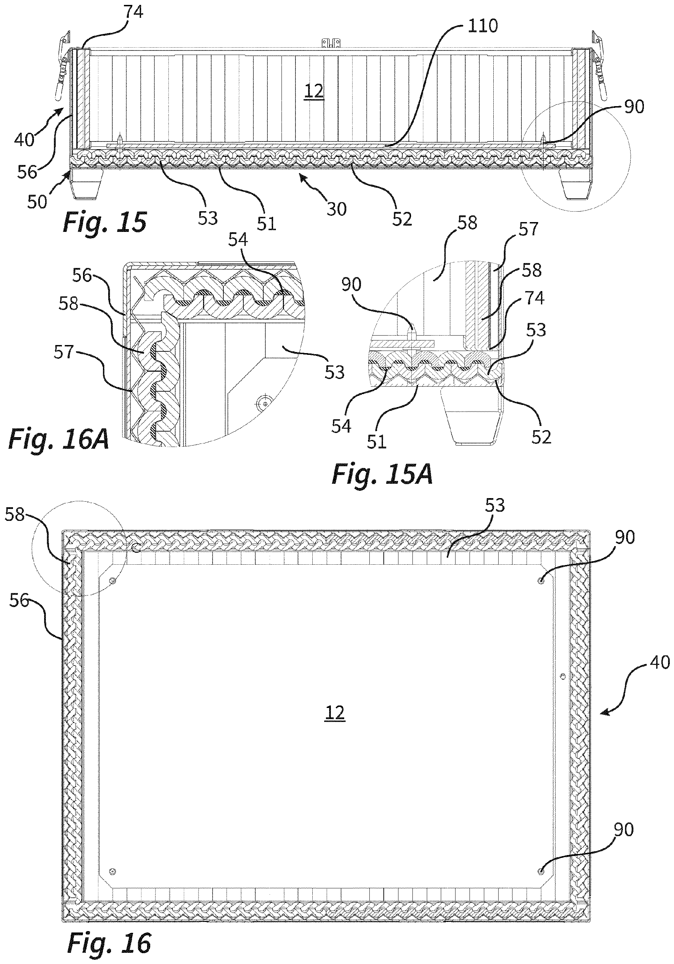

Der Aufbau des Unterteils ist anhand der Fig. 15 und 16 genauer erkennbar.

Der Tragboden 30 weist in der insbesondere aus Fig. 15 und 15A ersichtlichen Weise oberhalb des zum Unterteil gehörenden Bodenblechs 51 eine Vielzahl von parallel angeordneten Pappelementen 53 auf, bei denen es sich um etwa 180° überspannende im Querschnitt halbrunde Pappprofile handelt. Diese sind vorliegend in zwei Lagen und ineinander eingreifend angeordnet und in dieser Relativanordnung mittels Klebstoff 54 miteinander verklebt.

Zwischen dem Bodenblech 51 und den Pappelementen 53 ist zusätzlich ein gewelltes oder zickzackförmiges Stabilisierungselement 52 vorgesehen, welches die Pappelemente zusätzlich lagefixiert. Insbesondere kann es sich um Wellblech handeln.

Die Seitenwände 40 sind in der den Figuren 16 und 16A entnehmbaren Weise ähnlich gestaltet. Innenseitig der außenseitigen Blechfläche 56 sind Pappelemente 58, die wie die Pappelemente 53 einen etwa 180° überspannenden Querschnitt aufweisen und miteinander über Klebstoff 59 verklebt sind.

Die Pappelemente 58 sind dabei zur zusätzlichen Stabilisierung in metallische C-Profile-Abschnitte 74 der außenseitigen Blechfläche 56 eingesetzt und dort in ähnlicher Weise wie die Pappelemente 53 mittels Stabilisierungselementen 57 stabilisiert. Zusätzlich sind die Pappelement endseitig vorzugsweise mit dem umgebenden Blech verklebt.

Am Tragboden sind vier Auflageelemente 90 in Form von metallischen Stiften mit umgebender Auflagefläche vorgesehen, die die Pappelemente 53 durchdringen und vom Bodenblech 51 bis in den Aufnahmeraum ragen. Diese Auflageelemente dienen dem Zweck, die Gewichtskraft der zu transportierenden Kfz-Traktionsbatterie aufzunehmen und in die Füße weiterzuleiten. Diese können unmittelbar zur Auflage der Traktionsbatterie verwendet werden. Alternativ können Sie der Auflage eines Adapters dienen, der dann seinerseits die Traktionsbatterie trägt. Ein solcher Adapter ist in die Fig 15 und 16 in Art einer Auflageplatte 110 vorgesehen.

Der gezeigte Transportbehälter 10 erreicht ein hohes Maß an Stabilität bei hervorragenden Branddämmungseigenschaften.

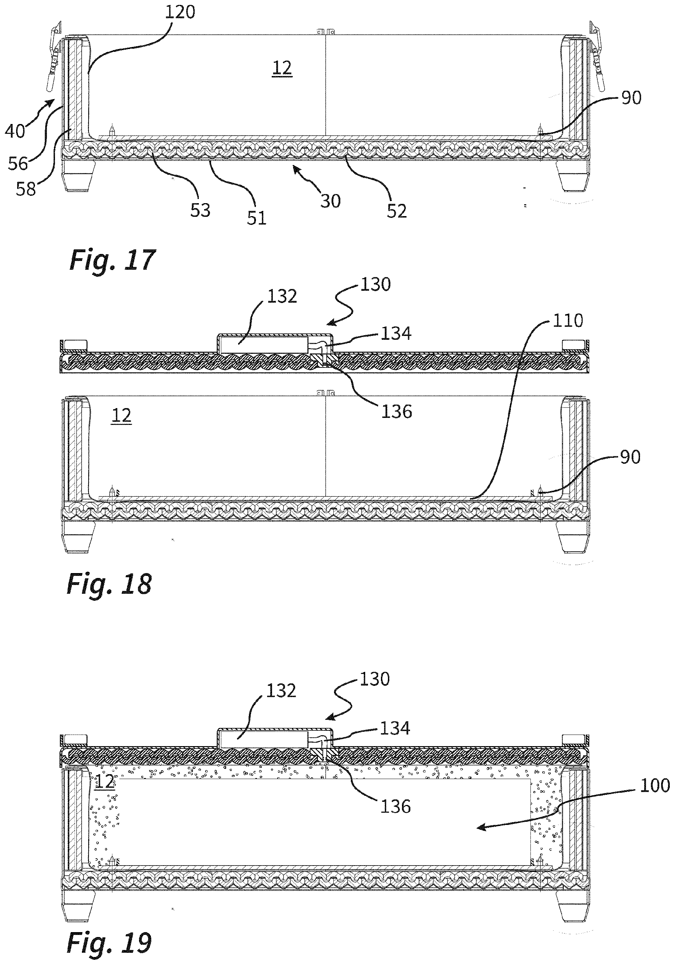

Fig. 17 zeigt den Tragboden 30 sowie die Seitenwände 40 einer modifizierten Variante. Die Modifikation besteht darin, dass hier eine mattenartige Einlage 120 in den Aufnahmeraum einbracht ist, die an den oberen Kanten der Seitenwände 40 befestigt ist. Hierdurch wird ein zusätzlicher Schutz erzielt. Die Einlage ist mit Lochungen versehen, durch die die Auflageelemente 90 hindurchragen.

Fig. 18 und 19 zeigen eine nochmals modifizierte Variante. Diese umfasst im Deckel ein Brandbekämpfungssystem 130, umfassend einen Behälter 132 mit Löschschaum, der über einen Einlasskanal 134 mit dem Aufnahmeraum verbunden ist. Am Ende des Einlasskanals 134 ist ein Ventil 136 vorgesehen, welches bei Hitze öffnet, beispielsweise indem eine Ventilflüssigkeit durch Expansion eine im Einlasskanal vorgesehene Barriere zerreißt.

Fig. 19 zeigt den dann eintretenden Zustand: Der Löschschaum aus dem Behälter 132 strömt in den Aufnahmeraum und füllt diesen aus. Hierdurch vermindert er die Sauerstoff menge, die bis zur Traktionsbatterie 100 gelangen kann.

## Patentansprüche

1. Transportbehälter (10) für eine Kfz-Traktionsbatterie (100) mit den folgenden Merkmalen:
a. der Transportbehälter weist einen Tragboden (30) und ein Deckenelement (60) auf, und
b. der Transportbehälter weist eine Mehrzahl von Seitenwänden (40) auf, die den Tragboden (30) und das Deckenelement (60) miteinander verbinden, und
c. die Seitenwände (40), der Tragboden (30) und das Deckenelement (60) definieren einen Aufnahmeraum (12) zur Aufnahme der Kfz-Traktionsbatterie (100) von mindestens 100 cm x 40 cm x 15 cm und von höchstens 250 cm x 150 cm x 60 cm,
d. der Tragboden (30), das Deckenelement (60) und/oder mindestens eine Seitenwand (40) ist zumindest abschnittsweise durch mindestens ein Pappelement (32, 34, 42, 44, 46, 48, 53, 58, 62) mit einer den Aufnahmeraum unmittelbar oder mittelbar begrenzenden Pappoberfläche gebildet,
**gekennzeichnet durch** das folgende zusätzliche Merkmal:
e. zur Bildung der Pappoberfläche weisen das Deckenelement (60), der Tragboden (30) und/oder die Seitenwände (40) eine Mehrzahl separater und parallel längserstreckter Pappelemente (44, 46, 48, 53, 58) auf, die aneinander anliegen und/oder einander überlappen.

2. Transportbehälter (10) für eine Kfz-Traktionsbatterie (100) nach Anspruch 1 mit dem folgenden zusätzlichen Merkmal:
a. die den Aufnahmeraum (12) begrenzenden Oberflächen des Deckenelements (60), des Tragbodens (30) und/oder der Seitenwände (40) sind zum überwiegenden Teil durch Pappoberflächen gebildet.

3. Transportbehälter (10) für eine Kfz-Traktionsbatterie (100) nach einem der vorstehenden Ansprüche mit dem folgenden zusätzlichen Merkmal:
a. die parallel längserstreckten Pappelemente (44) sind endseitig offene Hohlkörper,
insbesondere mit dem folgenden zusätzlichen Merkmal:
b. die parallel längserstreckten Pappelemente (44) sind als geschlossene Röhren mit kreiszylindrischem Außenquerschnitt ausgebildet.

4. Transportbehälter (10) für eine Kfz-Traktionsbatterie (100) nach einem der Ansprüche 1 bis 2 mit dem folgenden zusätzlichen Merkmal:
a. die parallel längserstreckten Pappelemente (46, 48, 53, 58) sind als partiell offene Rundröhrensegmente mit einem überspannten Winkel von mindestens 90° ausgebildet, vorzugsweise mit einem überspannten Winkel von mindestens 120°.

5. Transportbehälter (10) für eine Kfz-Traktionsbatterie (100) nach einem der vorstehenden Ansprüche mit dem folgenden zusätzlichen Merkmal:
a. der Tragboden (30) und/oder das Deckenelement (60) weisen eine Haltestruktur (35, 65) auf, die zur Aufnahme der Seitenwände (40) oder von die Seitenwände partiell bildenden Pappelemente (44) ausgebildet ist, und/oder
b. eine Mehrzahl von Pappelementen (58) ist gemeinsam in eine metallische Profilstruktur (74) eingefügt, welche eine Haltestruktur oder einander gegenüberliegende Haltestrukturen zur Aufnahme der Enden der Pappelemente (58) aufweist.

6. Transportbehälter (10) für eine Kfz-Traktionsbatterie (100) nach Anspruch 5 mit dem folgenden zusätzlichen Merkmal:
a. die Haltestruktur (35, 65) weist einen innenseitig und außenseitig durch Halteflächen des Tragbodens (30) bzw. des Deckenelements (60) oder des Profils gebildeten Vertiefungsbereich (36, 66) auf, in den eine Mehrzahl von Pappelementen (44, 46, 48) und vorzugsweise alle Pappelemente (44, 46, 48) der Seitenwände (40) hineinragen,
insbesondere mit mindestens einem der folgenden zusätzlichen Merkmale:
b. der Vertiefungsbereich (36, 66) ist als den Aufnahmeraum (12) umlaufend umgebender Vertiefungsbereich (36, 66) ausgebildet und/oder
c. die Haltestruktur (35, 65) weist eine Mehrzahl von Einzelstrukturen (38) zur individuellen Festlegung einer Mehrzahl von Pappelementen (44) auf und/oder
d. das Deckenelement und/oder der Tragboden ist aus einer Mehrzahl von miteinander verklebten Platten aufgebaut, die zumindest zum Teil Aussparungen zur Bildung der Haltestruktur aufweisen und/oder
e. das Deckenelement und/oder der Tragboden ist einstückig hergestellt, wobei die Haltestruktur durch einen Prägevorgang eingebracht ist.

7. Transportbehälter (10) für eine Kfz-Traktionsbatterie (100) nach einem der vorstehenden Ansprüche mit dem folgenden zusätzlichen Merkmal:
a. der Transportbehälter (10) weist metallische Strukturelemente (20, 70) auf, die am Deckenelement (60) oder am Tragboden (30) befestigt sind,
insbesondere mit mindestens einem der folgenden zusätzlichen Merkmale:
b. am Tragboden (30) ist eine Mehrzahl metallischer Strukturelemente (20) in Form von Abstandsträgern (22) vorgesehen, wobei die Abstandsträger (22) zueinander parallel erstreckt sind, um zwischen sich das Einfahren von Gabelzinken eines Staplers zu gestatten, und/oder
c. am Deckenelement (60) ist mindestens ein Strukturelement (70) in Form eines metallischen Deckelbeschlages (72) zum Anheben des Deckenelements (60) vorgesehen, und/oder
d. die Abstandsträger (22) und/oder der Deckelbeschlag (72) sind mittels einer Klebverbindung am Tragboden (30) bzw. dem Deckenelement (60) vorgesehen.

8. Transportbehälter (10) für eine Kfz-Traktionsbatterie (100) nach einem der vorstehenden Ansprüche mit dem folgenden zusätzlichen Merkmal:
a. im Aufnahmeraum (12) ist eine hitzebeständige Matte (120) vorgesehen, die zumindest den Tragboden (30) bedeckt,
vorzugsweise mit mindestens einem der zusätzlichen Merkmale:
b. die hitzebeständige Matte (120) bedeckt zumindest zum überwiegenden Teil auch die Seitenwände (40), und/oder
c. die hitzebeständige Matte (120) ist am Tragbodens und/oder an den Seitenwänden (40) befestigt, insbesondere an einem oberen Rand der Seitenwände.

9. Transportbehälter (10) für eine Kfz-Traktionsbatterie (100) nach einem der vorstehenden Ansprüche mit dem folgenden zusätzlichen Merkmal:
a. am Tragbodens (30) sind auf der Seite des Aufnahmeraums (12) Auflageelemente (90) zur Aufnahme der Gewichtskraft der Kfz-Traktionsbatterie (100) vorgesehen.

10. Transportbehälter (10) für eine Kfz-Traktionsbatterie (100) nach Anspruch 9 mit den folgenden zusätzlichen Merkmalen:
a. die Auflageelemente (90) weisen Träger auf, die die Pappoberfläche des Tragbodens durchdringen, und
b. die Träger sind auf ihrer von den Auflageelementen weg weisenden Seite an einer metallischen Außenstruktur (51) des Tragbodens (30) oder einer metallischen Stützstruktur befestigt, die zwischen einer Außenstruktur des Tragbodens und der Pappoberfläche des Tragbodens angeordnet ist.

11. Transportbehälter (10) für eine Kfz-Traktionsbatterie (100) nach Anspruch 9 mit den folgenden zusätzlichen Merkmalen:
a. die Auflageelemente sind an einer metallischen Stützstruktur befestigt, die oberhalb der Pappoberfläche des Tragbodens angeordnet ist,
insbesondere dem zusätzlichen Merkmal:
b. mindestens einige der Auflageelemente sind bezüglich ihrer Position durch Verlagerbarkeit oder Austauschbarkeit anpassbar.

12. Transportbehälter (10) für eine Kfz-Traktionsbatterie (100) nach einem der vorstehenden Ansprüche mit den folgenden Merkmalen:
a. der Transportbehälter weist mindestens ein Einlassventil (136) für ein Löschmittel oder Brandeindämmungsmittel auf, wobei das Einlassventil (136) zur Selbstöffnung bei Temperaturerhöhung oder Druckerhöhung ausgebildet ist oder wobei das Einlassventil (136) zur elektrisch gesteuerten Öffnung in Reaktion auf eine durch Sensoren erfasste Temperatur- oder Druckerhöhung ausgebildet ist, und
b. das Einlassventil (136) ist in einem Einlasskanal (134) für ein Löschmittel oder Brandeindämmungsmittel vorgesehen, der in den Aufnahmeraum (12) mündet.

13. Transportbehälter (10) für eine Kfz-Traktionsbatterie (100) nach Anspruch 12 mit den folgenden zusätzlichen Merkmalen:
a. der Transportbehälter (10) weist einen Speicher (132) für ein Löschmittel oder Brandeindämmungsmittel auf, und
b. der Speicher (132) ist mit dem Einlasskanal (134) verbunden, so dass das Löschmittel oder Brandeindämmungsmittel nach Öffnen des Einlassventils (136) durch den Einlasskanal (134) in den Aufnahmeraum (12) strömen kann.

14. Transportbehälter (10) für eine Kfz-Traktionsbatterie (100) nach einem der vorstehenden Ansprüche mit dem folgenden zusätzlichen Merkmal:
a. im Aufnahmeraum (12) ist zu Transportzwecken oder Lagerzwecken eine Kfz-Traktionsbatterie (100) eingelegt.

## Claims

1. Transport container (10) for a motor vehicle traction battery (100), having the following features:
a. the transport container has a support base (30) and a top element (60), and
b. the transport container has a plurality of side walls (40), which connect the support base (30) and the top element (60) to one another, and
c. the side walls (40), the support base (30) and the top element (60) define a receiving space (12) for receiving the motor vehicle traction battery (100) of at least 100 cm x 40 cm x 15 cm and of at most 250 cm x 150 cm x 60 cm,
d. the support base (30), the top element (60) and/or at least one side wall (40) is formed at least in certain portions by at least one pasteboard element (32, 34, 42, 44, 46, 48, 53, 58, 62) having a pasteboard surface which directly or indirectly delimits the receiving space,
**characterized by** the following additional feature:
e. for the purpose of forming the pasteboard surface, the top element (60), the support base (30) and/or the side walls (40) comprise a plurality of separate pasteboard elements (44, 46, 48, 53, 58), which extend longitudinally in parallel and lie against one another and/or overlap one another.

2. Transport container (10) for a motor vehicle traction battery (100) according to Claim 1, having the following additional feature:
a. those surfaces of the top element (60), the support base (30) and/or the side walls (40) which delimit the receiving space (12) are formed predominantly by pasteboard surfaces.

3. Transport container (10) for a motor vehicle traction battery (100) according to either of the preceding claims, having the following additional feature:
a. the pasteboard elements (44), which extend longitudinally in parallel, are hollow bodies with open ends,
in particular having the following additional feature:
b. the pasteboard elements (44), which extend longitudinally in parallel, are in the form of closed tubes with a circular-cylindrical outer cross section.

4. Transport container (10) for a motor vehicle traction battery (100) according to either of Claims 1 and 2, having the following additional feature:
a. the pasteboard elements (46, 48, 53, 58), which extend longitudinally in parallel, are in the form of partially open, round tube segments with a spanned angle of at least 90°, preferably with a spanned angle of at least 120°.

5. Transport container (10) for a motor vehicle traction battery (100) according to one of the preceding claims, having the following additional feature:
a. the support base (30) and/or the top element (60) have a retaining structure (35, 65), which is formed to receive the side walls (40) or pasteboard elements (44) partially forming the side walls, and/or
b. a plurality of pasteboard elements (58) is inserted collectively into a metallic profile structure (74), which has a retaining structure or oppositely situated retaining structures for receiving the ends of the pasteboard elements (58) .

6. Transport container (10) for a motor vehicle traction battery (100) according to Claim 5, having the following additional feature:
a. the retaining structure (35, 65) has a recessed region (36, 66), which is formed on the inside and outside by retaining surfaces of the support base (30) and/or of the top element (60) or of the profile and into which protrude a plurality of pasteboard elements (44, 46, 48) and preferably all pasteboard elements (44, 46, 48) of the side walls (40),
in particular having at least one of the following additional features:
b. the recessed region (36, 66) is in the form of a recessed region (36, 66) which surrounds the periphery of the receiving space (12), and/or
c. the retaining structure (35, 65) has a plurality of individual structures (38) for individually fixing a plurality of pasteboard elements (44), and/or
d. the top element and/or the support base is formed from a plurality of panels which are adhesively bonded to one another and at least to some extent comprise cutouts for forming the retaining structure, and/or
e. the top element and/or the support base is produced in one piece, the retaining structure being introduced by a stamping operation.

7. Transport container (10) for a motor vehicle traction battery (100) according to one of the preceding claims, having the following additional feature:
a. the transport container (10) has metallic structural elements (20, 70), which are fastened to the top element (60) or to the support base (30),
in particular having at least one of the following additional features:
b. a plurality of metallic structural elements (20) in the form of spacer supports (22) is provided on the support base (30), the spacer supports (22) extending parallel to one another in order to allow fork arms of a lift truck to be inserted between them, and/or
c. at least one structural element (70) in the form of a metallic cover fitting (72) is provided on the top element (60) for the purpose of raising the top element (60), and/or
d. the spacer supports (22) and/or the cover fitting (72) are provided on the support base (30) and/or the top element (60) by means of an adhesive bond.

8. Transport container (10) for a motor vehicle traction battery (100) according to one of the preceding claims, having the following additional feature:
a. a heat-resistant mat (120), which covers at least the support base (30), is provided in the receiving space (12),
preferably having at least one of the additional features:
b. the heat-resistant mat (120) also at least predominantly covers the side walls (40), and/or
c. the heat-resistant mat (120) is fastened to the support base and/or to the side walls (40), in particular at an upper edge of the side walls.

9. Transport container (10) for a motor vehicle traction battery (100) according to one of the preceding claims, having the following additional feature:
a. on the support base (30), bearing elements (90) for absorbing the force of the weight of the motor vehicle traction battery (100) are provided on the side of the receiving space (12).

10. Transport container (10) for a motor vehicle traction battery (100) according to Claim 9, having the following additional features:
a. the bearing elements (90) have supports, which penetrate the pasteboard surface of the support base, and
b. the supports are fastened on their side facing away from the bearing elements to a metallic outer structure (51) of the support base (30) or a metallic underpinning structure, which is arranged between an outer structure of the support base and the pasteboard surface of the support base.

11. Transport container (10) for a motor vehicle traction battery (100) according to Claim 9, having the following additional feature:
a. the bearing elements are fastened to a metallic underpinning structure, which is arranged above the pasteboard surface of the support base,
in particular the additional feature:
b. at least some of the bearing elements can be adjusted in terms of their position by virtue of being able to be displaced or exchanged.

12. Transport container (10) for a motor vehicle traction battery (100) according to one of the preceding claims, having the following features:
a. the transport container has at least one inlet valve (136) for an extinguishing agent or fire-containing agent, the inlet valve (136) being designed to automatically open in the event of a temperature increase or pressure increase, or the inlet valve (136) being designed to open in an electrically controlled manner in reaction to a temperature increase or pressure increase detected by sensors, and
b. the inlet valve (136) is provided in an inlet channel (134) for an extinguishing agent or fire-containing agent, which inlet channel opens out into the receiving space (12).

13. Transport container (10) for a motor vehicle traction battery (100) according to Claim 12, having the following additional features:
a. the transport container (10) has a reservoir (132) for an extinguishing agent or fire-containing agent, and
b. the reservoir (132) is connected to the inlet channel (134), with the result that the extinguishing agent or fire-containing agent can flow through the inlet channel (134) into the receiving space (12) after the inlet valve (136) has opened.

14. Transport container (10) for a motor vehicle traction battery (100) according to one of the preceding claims, having the following additional feature:
a. a motor vehicle traction battery (100) is placed in the receiving space (12) for transport purposes or storage purposes.

## Revendications

1. Contenant de transport (10) pour une batterie de traction de véhicule automobile (100) ayant les caractéristiques suivantes :
a. le contenant de transport comprend un fond porteur (30) et un élément couvercle (60), et
b. le contenant de transport comprend une pluralité de parois latérales (40), qui relient le fond porteur (30) et l'élément couvercle (60) l'un à l'autre, et
c. les parois latérales (40), le fond porteur (30) et l'élément couvercle (60) définissent une chambre de réception (12) pour la réception de la batterie de traction de véhicule automobile (100) d'au moins 100 cm x 40 cm x 15 cm et d'au plus 250 cm x 150 cm x 60 cm,
d. le fond porteur (30), l'élément couvercle (60) et/ou au moins une paroi latérale (40) sont formés au moins en sections par au moins un élément en carton (32, 34, 42, 44, 46, 48, 53, 58, 62) ayant une surface en carton délimitant directement ou indirectement la chambre de réception,
**caractérisé par** la caractéristique supplémentaire suivante :
e. pour la formation de la surface en carton, l'élément couvercle (60), le fond porteur (30) et/ou les parois latérales (40) comprennent une pluralité d'éléments en carton (44, 46, 48, 53, 58) séparés et allongés parallèlement, qui s'appliquent les uns contre les autres et/ou se chevauchent les uns les autres.

2. Contenant de transport (10) pour une batterie de traction de véhicule automobile (100) selon la revendication 1, ayant la caractéristique supplémentaire suivante :
a. les surfaces délimitant la chambre de réception (12) de l'élément couvercle (60), du fond porteur (30) et/ou des parois latérales (40) sont en majeure partie formées par des surfaces en carton.

3. Contenant de transport (10) pour une batterie de traction de véhicule automobile (100) selon l'une quelconque des revendications précédentes, ayant la caractéristique supplémentaire suivante :
a. les éléments en carton (44) allongés parallèlement sont des corps creux ouverts du côté de l'extrémité,
notamment ayant la caractéristique supplémentaire suivante :
b. les éléments en carton (44) allongés parallèlement sont configurés en tant que tubes fermés ayant une section transversale extérieure cylindrique circulaire.

4. Contenant de transport (10) pour une batterie de traction de véhicule automobile (100) selon l'une quelconque des revendications 1 à 2, ayant la caractéristique supplémentaire suivante :
a. les éléments en carton (46, 48, 53, 58) allongés parallèlement sont configurés en tant que segments tubulaires ronds partiellement ouverts ayant un angle enjambé d'au moins 90°, de préférence ayant un angle enjambé d'au moins 120°.

5. Contenant de transport (10) pour une batterie de traction de véhicule automobile (100) selon l'une quelconque des revendications précédentes, ayant la caractéristique supplémentaire suivante :
a. le fond porteur (30) et/ou l'élément couvercle (60) comprennent une structure de maintien (35, 65), qui est configurée pour la réception des parois latérales (40) ou d'éléments en carton (44) formant partiellement les parois latérales, et/ou
b. une pluralité d'éléments en carton (58) est insérée conjointement dans une structure profilée métallique (74), qui comprend une structure de maintien ou des structures de maintien en vis-à-vis pour la réception des extrémités des éléments en carton (58).

6. Contenant de transport (10) pour une batterie de traction de véhicule automobile (100) selon la revendication 5, ayant la caractéristique supplémentaire suivante :
a. la structure de maintien (35, 65) comprend une zone en creux (36, 66) du côté intérieur et du côté extérieur, formée par des surfaces de maintien du fond porteur (30) ou de l'élément couvercle (60) ou du profilé, dans laquelle une pluralité d'éléments en carton (44, 46, 48) et de préférence tous les éléments en carton (44, 46, 48) des parois latérales (40) pénètrent,
notamment ayant au moins une des caractéristiques supplémentaires suivantes :
b. la zone en creux (36, 66) est configurée en tant que zone en creux (36, 66) entourant circonférentiellement la chambre de réception (12) et/ou
c. la structure de maintien (35, 65) comprend une pluralité de structures individuelles (38) pour la fixation individuelle d'une pluralité d'éléments en carton (44) et/ou
d. l'élément couvercle et/ou le fond porteur sont construits à partir d'une pluralité de plaques collées les unes avec les autres, qui comprennent au moins en partie des évidements pour la formation de la structure de maintien et/ou
e. l'élément couvercle et/ou le fond porteur sont fabriqués d'un seul tenant, la structure de maintien étant aménagée par un processus de gaufrage.

7. Contenant de transport (10) pour une batterie de traction de véhicule automobile (100) selon l'une quelconque des revendications précédentes, ayant la caractéristique supplémentaire suivante :
a. le contenant de transport (10) comprend des éléments structuraux métalliques (20, 70), qui sont fixés sur l'élément couvercle (60) ou sur le fond porteur (30),
notamment ayant au moins une des caractéristiques supplémentaires suivantes :
b. une pluralité d'éléments structuraux métalliques (20) sous la forme d'espaceurs (22) est prévue sur le fond porteur (30), les espaceurs (22) s'étendant parallèlement les uns aux autres, afin de permettre entre eux l'introduction de bras de fourche d'un chariot élévateur et/ou
c. au moins un élément structural (70) sous la forme d'une ferrure de couvercle métallique (72) pour le soulèvement de l'élément couvercle (60) est prévu sur l'élément couvercle (60), et/ou
d. les espaceurs (22) et/ou la ferrure de couvercle (72) sont prévus sur le fond porteur (30) ou l'élément couvercle (60) au moyen d'une liaison par collage.

8. Contenant de transport (10) pour une batterie de traction de véhicule automobile (100) selon l'une quelconque des revendications précédentes, ayant la caractéristique supplémentaire suivante :
a. un mat résistant à la chaleur (120) est prévu dans la chambre de réception (12), qui recouvre au moins le fond porteur (30),
de préférence ayant au moins une des caractéristiques supplémentaires :
b. le mat résistant à la chaleur (120) recouvre au moins en majeure partie également les parois latérales (40), et/ou
c. le mat résistant à la chaleur (120) est fixé sur le fond porteur et/ou sur les parois latérales (40), notamment sur un bord supérieur des parois latérales.

9. Contenant de transport (10) pour une batterie de traction de véhicule automobile (100) selon l'une quelconque des revendications précédentes, ayant la caractéristique supplémentaire suivante :
a. des éléments d'appui (90) pour la réception du poids de la batterie de traction de véhicule automobile (100) sont prévus sur le fond porteur (30) sur le côté de la chambre de réception (12).

10. Contenant de transport (10) pour une batterie de traction de véhicule automobile (100) selon la revendication 9, ayant les caractéristiques supplémentaires suivantes :
a. les éléments d'appui (90) comprennent des supports, qui traversent la surface en carton du fond porteur, et
b. les supports sont fixés sur leur côté éloigné des éléments d'appui sur une structure extérieure métallique (51) du fond porteur (30) ou sur une structure de soutien métallique, qui est agencée entre une structure extérieure du fond porteur et la surface en carton du fond porteur.

11. Contenant de transport (10) pour une batterie de traction de véhicule automobile (100) selon la revendication 9, ayant la caractéristique supplémentaire suivante :
a. les éléments d'appui sont fixés sur une structure de soutien métallique, qui est agencée au-dessus de la surface en carton du fond porteur,
notamment la caractéristique supplémentaire :
b. au moins certains des éléments d'appui sont adaptables au regard de leur position par une possibilité de déplacement ou une possibilité d'échange.

12. Contenant de transport (10) pour une batterie de traction de véhicule automobile (100) selon l'une quelconque des revendications précédentes, ayant les caractéristiques suivantes :
a. le contenant de transport comprend au moins une soupape d'entrée (136) pour un agent extincteur ou un agent de maîtrise d'incendie, la soupape d'entrée (136) étant configurée pour l'ouverture automatique lors d'une élévation de température ou d'une élévation de pression, ou la soupape d'entrée (136) étant configurée pour l'ouverture commandée électriquement en réaction à une élévation de température ou de pression détectée par des capteurs, et
b. la soupape d'entrée (136) est prévue dans un canal d'entrée (134) pour un agent extincteur ou un agent de maîtrise d'incendie, qui débouche dans la chambre de réception (12).

13. Contenant de transport (10) pour une batterie de traction de véhicule automobile (100) selon la revendication 12, ayant les caractéristiques supplémentaires suivantes :
a. le contenant de transport (10) comprend un réservoir (132) pour un agent extincteur ou un agent de maîtrise d'incendie, et
b. le réservoir (132) est relié avec le canal d'entrée (134), de telle sorte que l'agent extincteur ou l'agent de maîtrise d'incendie puisse s'écouler par le canal d'entrée (134) dans la chambre de réception (12) après l'ouverture de la soupape d'entrée (136).

14. Contenant de transport (10) pour une batterie de traction de véhicule automobile (100) selon l'une quelconque des revendications précédentes, ayant la caractéristique supplémentaire suivante :
a. une batterie de traction de véhicule automobile (100) est placée dans la chambre de réception (12) à des fins de transport ou à des fins de stockage.
